# DEMANDE DE BREVET EUROPEEN

(11) **EP 2 052 921 A1**
(43) Date de publication de la demande: **29.04.2009**
(21) Numéro de dépôt: 08163753.0
(22) Date de dépôt: 05.09.2008
(51) Int. Cl.: B60R 22/36

(54) **dispositif de contrôle déporté et intégré d'un mécanisme de verrouillage de pêne d'une ceinture de sécurité de véhicule automobile**

(30) Priorité: 26.10.2007 FR 0758601
(71) Demandeur: Peugeot Citroën Automobiles SA, 78140 Vélizy-Villacoublay (FR)
(72) Inventeur: Bertrand Belanger, Pascal, 78280, GUYANCOURT (FR)
(74) Mandataire: Vigand, Régis Louis Michel

(57) **Abrégé**

Un dispositif (D) est dédié au contrôle d'un mécanisme de verrouillage d'un pêne d'une ceinture de sécurité équipant un siège d'un véhicule automobile. Ce mécanisme est implanté dans une boucle et comprend i) des moyens de verrouillage agencés pour prendre des première et seconde positions dans lesquelles ils verrouillent et libèrent le pêne, respectivement, et ii) un premier actionneur agencé, en cas d'actionnement, pour faire passer les moyens de verrouillage de leur première à leur seconde position. Ce dispositif (D) comprend un second actionneur (A2), déporté sur une tranche (TS) du dossier (DS) du siège (SE), raccordé via un câble (CA) aux moyens de verrouillage (VR) et agencé, en cas d'actionnement, pour tirer le câble (CA) pour faire passer les moyens de verrouillage (VR) de leur première position à leur seconde position.

## Description

L'invention concerne les ceintures de sécurité qui équipent certains sièges de véhicules automobiles, et plus précisément le contrôle du déverrouillage du pêne (extractible) que comprennent de telles ceintures de sécurité.

Une ceinture de sécurité, qui équipe un siège de véhicule automobile, comprend généralement un pêne destiné, lorsqu'un passager est assis sur ce siège, à être verrouillé par un mécanisme de verrouillage qui est implanté dans une boucle intégrée dans le siège ou solidarisée à la structure du véhicule. Ce mécanisme de verrouillage comprend des moyens de verrouillage, qui sont agencés pour prendre une première position dans laquelle ils verrouillent le pêne et une seconde position dans laquelle ils libèrent le pêne, et un premier actionneur (généralement un bouton), agencé, en cas d'actionnement, pour faire passer les moyens de verrouillage de leur première position à leur seconde position.

L'accès au premier actionneur étant souvent problématique, notamment lorsqu'ils sont intégrés dans un siège (ou une banquette) arrière, par exemple du fait de la présence d'objets et/ou d'un siège pour enfant dans lequel est éventuellement installé un enfant, il a été proposé, dans le document brevet DE 3341568, de contrôler le mécanisme de verrouillage de la boucle au moyen d'un second actionneur motorisé déporté. Ce dernier comprend un moteur raccordé via un câble aux moyens de verrouillage du mécanisme de verrouillage et agencé, lorsqu'il est mis en marche, pour tirer le câble de manière à faire passer les moyens de verrouillage de leur première position à leur seconde position.

L'invention a pour but de proposer une solution alternative déportée, non motorisée, intégrée et facile d'accès.

Elle propose à cet effet un dispositif, dédié au contrôle d'un mécanisme de verrouillage de pêne du type présenté dans la partie d'introduction, et comprenant un second actionneur raccordé via un câble aux moyens de verrouillage et agencé, en cas d'actionnement, pour tirer ce câble pour faire passer les moyens de verrouillage de leur première position (de verrouillage) à leur seconde position (de déverrouillage).

Ce dispositif de contrôle se caractérise par le fait que :
- son câble est logé au moins partiellement à l'intérieur du siège qui est équipé de la ceinture de sécurité dont fait partie le pêne, et
- son second actionneur est déporté sur une tranche du dossier du siège.

Le dispositif de contrôle selon l'invention peut comporter d'autres caractéristiques qui peuvent être prises séparément ou en combinaison, et notamment :
- le second actionneur peut comprendre un levier monté à rotation sur un axe et comportant une première partie raccordée à l'une des extrémités du câble et une seconde partie solidarisée à la première partie selon un angle choisi et propre à être entraînée en rotation autour de l'axe de manière à provoquer le tirage du câble par la première partie et par conséquent le passage des moyens de verrouillage de leur première position à leur seconde position ;
   ➢ la seconde partie du levier peut être sensiblement plus longue que sa première partie afin d'offrir un bras de levier important ;
   les première et seconde parties du levier peuvent faire un angle qui est compris entre environ 60° et environ 120°;
- le second actionneur peut être déporté sur une partie supérieure de la tranche du dossier du siège ;
- en présence de moyens de verrouillage comprenant un levier, monté à rotation sur un axe et comportant une première partie propre à immobiliser le pêne lorsque le levier est dans sa première position et une seconde partie solidarisée à la première partie et propre, en cas d'actionnement au moyen du premier actionneur, à entraîner la première partie de sorte qu'elle libère le pêne, le câble peut comprendre une autre extrémité raccordée à la première partie du levier et propre, en cas de tirage au moyen du second actionneur, à entraîner la première partie de sorte qu'elle libère le pêne.

D'autres caractéristiques et avantages de l'invention apparaîtront à l'examen de la description détaillée ci-après, et des dessins annexés, sur lesquels :
- la figure 1 illustre schématiquement, dans une vue en perspective, un exemple de dispositif de contrôle selon l'invention intégré dans un siège de véhicule automobile, et couplé à une boucle de ceinture de sécurité,
- la figure 2 illustre schématiquement, dans une vue en coupe transversale, un exemple de réalisation d'une boucle de ceinture de sécurité couplée à une partie d'un dispositif de contrôle selon l'invention, et
- les figures 3A et 3B illustrent schématiquement, dans des vues en coupe transversale, un exemple de réalisation d'une partie du dispositif de contrôle selon l'invention, respectivement dans une position dite de repos et une position de déverrouillage.

Les dessins annexés pourront non seulement servir à compléter l'invention, mais aussi contribuer à sa définition, le cas échéant.

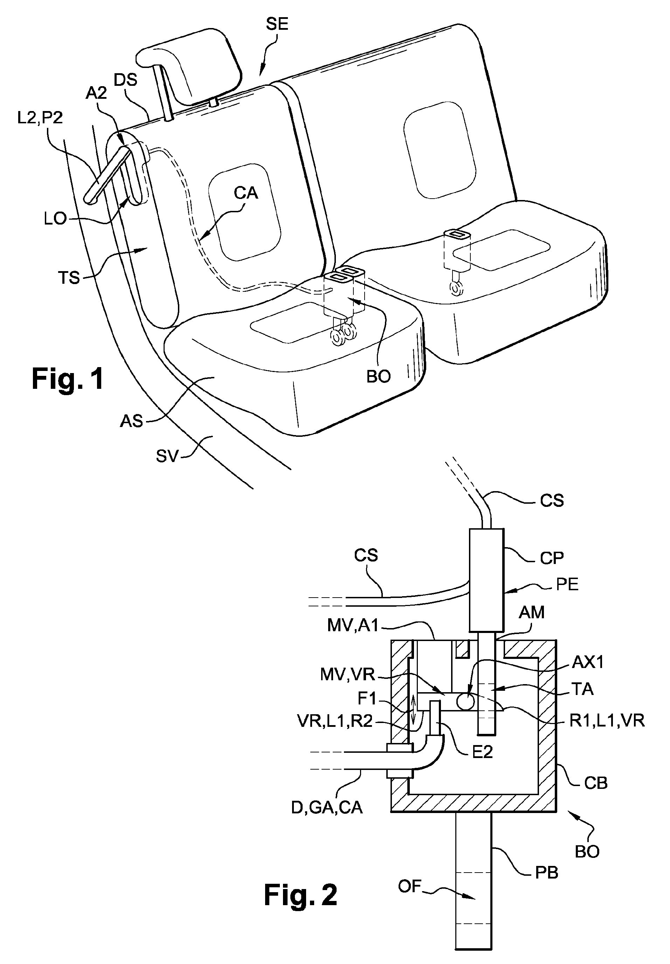

On a schématiquement représenté sur la figure 1 un exemple de siège (ou partie de banquette) SE implanté dans la partie arrière d'un habitacle de véhicule automobile et équipé d'une boucle BO de ceinture de sécurité (SC) couplée à un dispositif de contrôle selon l'invention. Le siège SE comprend classiquement une assise AS sur laquelle un passager peut s'asseoir (ou sur laquelle on peut installer un siège pour enfant) et un dossier DS sur lequel ledit passager peut s'adosser. On notera que l'invention s'applique également aux sièges qui sont installés dans les parties avant et intermédiaire de l'habitacle.

La boucle (de ceinture de sécurité) BO est implantée dans l'assise AS du siège SE ou bien entre le siège et la banquette voisine (ou le siège voisin). Elle est soit solidarisée au siège SE, soit à la structure SV du véhicule, par exemple son plancher.

Comme illustré schématiquement dans l'exemple de réalisation non limitatif de la figure 2, la boucle BO comprend classiquement :
- un carter CB, généralement en matière plastique (ou analogue),
- un pied de fixation PB, généralement en matière plastique (ou analogue), solidarisé au carter CB ou prolongeant ce dernier de façon monobloc, et muni d'un orifice de fixation OF pour permettre la fixation de la boucle BO au siège SE ou à la structure du véhicule SV, et
- un mécanisme de verrouillage(/déverrouillage) MV comprenant des moyens de verrouillage VR et un premier actionneur A1 chargés de verrouiller (/déverrouiller) un pêne extractible PE de la ceinture de sécurité CS.

Le pêne PE comprend classiquement un carter CP dans lequel coulisse la sangle de la ceinture de sécurité SC, et une âme AM, solidarisée au carter de pêne CP, généralement en métal, destinée à être introduite à l'intérieur du carter de boucle CB et comportant un trou TA destiné à permettre son verrouillage par les moyens de verrouillage VR du mécanisme MV.

Les moyens de verrouillage VR sont agencés de manière à prendre une première position (illustrée sur la figure 2) dans laquelle ils verrouillent le pêne PE et une seconde position dans laquelle ils libèrent le pêne PE.

Le premier actionneur A1 est agencé de manière à ce qu'en cas d'actionnement par un utilisateur (généralement un passager du véhicule), matérialisé par la flèche à double sens F1 de la figure 2, il fasse passer les moyens de verrouillage VR de leur première position à leur seconde position.

Ce premier actionneur A1 se présente par exemple sous la forme d'un bouton-poussoir monté en translation à l'intérieur du carter de boucle CB, sous contrainte d'une force de rappel générée par au moins un ressort ou d'une lame élastique.

Dans l'exemple de réalisation non limitatif illustré sur la figure 2, les moyens de verrouillage VR sont agencés sous la forme d'un premier levier L1 monté à rotation sur un axe AX1 à l'intérieur du carter de boucle CB. Ce premier levier L1 comprend une première partie R1 propre à immobiliser l'âme AM du pêne PE lorsque le premier levier L1 est dans la première position (illustrée sur la figure 2) et une seconde partie R2 solidarisée à la première partie R1 et propre, lorsqu'elle est actionnée par le premier actionneur A1, à entraîner la première partie R1 de sorte qu'elle libère le pêne PE (plaçant ainsi le premier levier L1 dans la seconde position (non illustrée)).

Dans cet exemple, les première R1 et seconde R2 parties du premier levier L1 se prolongent sensiblement selon une même direction. Mais cela n'est pas obligatoire. Elles pourraient en effet être orientées selon deux directions différentes de manière à faire un angle. Par ailleurs, l'axe de rotation AX1 est ici placé entre les première R1 et seconde R2 parties du premier levier L1. Mais cela n'est pas obligatoire. Il pourrait en effet être placé à une extrémité d'un bras dont l'autre extrémité est solidarisée aux première R1 et seconde R2 parties du premier levier L1. Dans ce cas, ce dernier (L1) peut par exemple présenter sensiblement une forme de T.

L'immobilisation de l'âme AM du pêne PE résulte du fait que l'extrémité de la première partie R1 du levier L1 traverse le trou TA de cette âme AM.

On comprendra que lorsque le premier actionneur A1 est entraîné en translation vers l'intérieur du carter de boucle CB, suivant la flèche F1, il appuie sur la seconde partie R2, ce qui l'entraîne en rotation (vers le bas) autour de l'axe AX1 et entraîne dans le même temps la première partie R1 en rotation (vers le haut) autour de l'axe AX1, permettant ainsi de libérer l'âme AM du pêne PE.

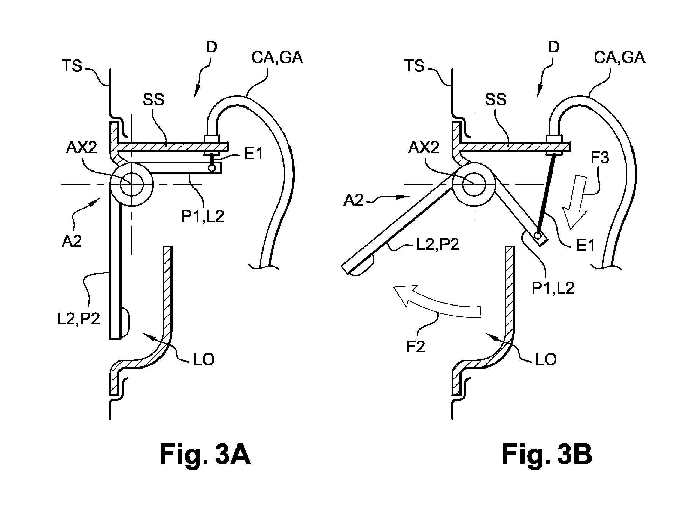

La boucle BO, et plus précisément ses moyens de verrouillage VR, sont couplés à un dispositif de contrôle D. Un exemple de réalisation non limitatif de ce dernier (D) est illustré sur les figures 3A et 3B.

Le dispositif D comprend un second actionneur A2 qui est raccordé via un câble CA (qui coulisse dans une gaine GA) aux moyens de verrouillage VR. Ce second actionneur A2 est agencé de manière à ce qu'en cas d'actionnement il tire le câble CA pour faire passer les moyens de verrouillage VR de leur première position à leur seconde position.

Selon l'invention, le câble CA est logé au moins partiellement à l'intérieur du siège SE. Par exemple, sa gaine GA est logée au moins en partie à l'intérieur de l'assise AS et/ou du dossier DS du siège SE.

Le second actionneur A2 est supporté par une structure de support SS qui est fixée sur la tranche TS du dossier DS du siège SE et donc déportée par rapport à la boucle BO. Par exemple, et comme illustré, la structure de support SS est installée dans un logement dédié LO qui est défini dans la tranche TS du siège SE, du côté de la portière du véhicule. Une première extrémité de la gaine GA est également fixée sur la structure de support SS de manière à permettre le coulissement du câble CA en cas d'actionnement.

Le second actionneur A2 comprend par exemple, comme illustré, un second levier L2 qui est monté à rotation sur un axe AX2 et comporte une première partie P1 raccordée à une première extrémité E1 du câble CA et une seconde partie P2 solidarisée à la première partie P1 selon un angle choisi. Cet angle est par exemple choisi entre environ 60° et environ 120°. Dans l'exemple de réalisation non limitatif illustré sur les figures 3A et 3B, cet angle est sensiblement égal à 90°.

La seconde partie P2 du second levier L2 est destinée à être entraînée en rotation autour de l'axe AX2 (et donc relevée (ou dans une variante de réalisation abaissée)) par un utilisateur (par exemple un passager du véhicule ou une personne située à l'extérieur du véhicule).

Une première extrémité E1 du câble CA est solidarisée à la première partie P1 du second levier L2. Par ailleurs, comme illustré sur la figure 2, une seconde extrémité E2 du câble CA, opposée à la première E1, est solidarisée à la seconde partie R2 du premier levier L1. Une seconde extrémité de la gaine GA, opposée à la première, est fixée au carter de boucle CB de manière à permettre le coulissement du câble CA en cas d'actionnement.

La première partie P1 du second levier L2 est destinée à être entraînée en rotation autour de l'axe AX2 par la seconde partie P2 (lorsqu'elle est entraînée en rotation (ou actionnée)) de manière à provoquer le tirage de la première extrémité E1 du câble CA et donc le passage des moyens de verrouillage VR de leur première position à leur seconde position.

On comprendra que lorsque la seconde partie P2 du second levier L2 est entraînée en rotation autour de l'axe AX2, suivant la flèche F2 de la figure 3B (et donc ici vers le haut et vers l'extérieur du véhicule), elle entraîne en rotation la première partie P1 du second levier L2 également autour de l'axe AX2 (mais ici vers le bas), ce qui provoque le tirage de la première extrémité E1 du câble CA suivant la flèche F3 de la figure 3B. Ce tirage provoque alors dans le carter de boucle CB l'entraînement en rotation (vers le bas) autour de l'axe AX1 de la seconde partie R2 du premier levier L1, du fait de son raccordement à la seconde extrémité E2 du câble CA, et donc l'entraînement en rotation (vers le haut) autour de l'axe AX1 de la première partie R1 en rotation (vers le haut) autour de l'axe AX1, permettant ainsi de libérer à distance l'âme AM du pêne PE.

Afin de limiter la force que l'utilisateur doit exercer sur la seconde partie P2 du second levier L2 pour déverrouiller à distance l'âme AM du pêne PE, on peut définir un bras de levier important en utilisant une seconde partie P2 du second levier L2 sensiblement plus longue que la première partie P1 de ce même second levier L2. C'est le cas dans le mode de réalisation non limitatif illustré sur les figures 3A et 3B.

La première partie P1 du second levier L2 fait préférentiellement l'objet d'une force de rappel vers la structure de support SS afin qu'elle revienne automatiquement dans sa position initiale (de repos - illustrée sur la figure 3A) une fois que l'utilisateur cesse de tirer sur la seconde partie P2 du second levier L2.

Lorsque le second actionneur A2 n'est pas actionné, la seconde partie P2 de son second levier L2 est placée contre la tranche TS (ou légèrement à l'intérieur du logement LO), comme illustré sur la figure 3A. Dans cette situation, le câble CA est donc « au repos », c'est-à-dire non tiré, si bien qu'il n'exerce pas de traction sur le premier levier L1. Par conséquent, le second actionneur A2 n'agit pas sur le mécanisme de verrouillage MV, lequel peut donc classiquement contrôler localement, c'est-à-dire au niveau de la boucle BO, le verrouillage/déverrouillage de l'âme AM du pêne PE, au moyen de son premier actionneur A1.

Il est important de noter que le dispositif de contrôle D, selon l'invention, peut être couplé, via son câble CA, à d'autres modes de réalisation de mécanisme de verrouillage MV que celui décrit précédemment en référence à la figure 2, dès lors que ces autres modes de réalisation permettent une libération du pêne PE en cas de tirage dudit câble CA.

L'invention offre un dispositif de contrôle déporté, intégré dans un siège, de coût réduit et totalement mécanique, et donc permettant de l'utiliser en toute circonstance, et notamment lorsque le moteur du véhicule est coupé ou que la batterie de ce dernier est totalement déchargée.

L'invention ne se limite pas aux modes de réalisation de dispositif de contrôle décrits ci-avant, seulement à titre d'exemple, mais elle englobe toutes les variantes que pourra envisager l'homme de l'art dans le cadre des revendications ci-après.

## Revendications

1. Dispositif (D) de contrôle d'un mécanisme (MV) de verrouillage d'un pêne (PE) d'une ceinture de sécurité (SC) équipant un siège (SE) d'un véhicule automobile, ledit mécanisme (MV) étant implanté dans une boucle (BO) et comprenant des moyens de verrouillage (VR) agencés pour prendre une première position dans laquelle ils verrouillent le pêne (PE) et une seconde position dans laquelle ils libèrent le pêne (PE), et un premier actionneur (A1) agencé, en cas d'actionnement, pour faire passer lesdits moyens de verrouillage (VR) de leur première position à leur seconde position, et ledit dispositif (D) comprenant un second actionneur (A2) raccordé via un câble (CA) auxdits moyens de verrouillage (VR) et agencé, en cas d'actionnement, pour tirer ledit câble (CA) pour faire passer lesdits moyens de verrouillage (VR) de leur première position à leur seconde position, **caractérisé en ce que** ledit câble (CA) est logé au moins partiellement à l'intérieur dudit siège (SE), et **en ce que** ledit second actionneur (A2) est déporté sur une tranche (TS) du dossier (DS) dudit siège (SE).

2. Dispositif selon la revendication 1, **caractérisé en ce que** ledit second actionneur (A2) comprend un levier (L2) monté à rotation sur un axe (AX2) et comportant une première partie (P1) raccordée à une extrémité (E1) dudit câble (CA) et une seconde partie (P2) solidarisée à ladite première partie (P1) selon un angle choisi et propre à être entraînée en rotation autour dudit axe (AX2) de manière à provoquer le tirage dudit câble (CA) par ladite première partie (P1) et donc le passage desdits moyens de verrouillage (VR) de leur première position à leur seconde position.

3. Dispositif selon la revendication 2, **caractérisé en ce que** ladite seconde partie (P2) du levier (L2) est sensiblement plus longue que sa première partie (P1) de manière à offrir un bras de levier important.

4. Dispositif selon l'une des revendications 2 et 3, **caractérisé en ce que** lesdites première (P1) et seconde (P2) parties du levier (L2) font un angle compris entre environ 60° et environ 120°.

5. Dispositif selon l'une des revendications 1 à 4, **caractérisé en ce que** ledit second actionneur (A2) est déporté sur une partie supérieure de la tranche (TS) du dossier (DS) dudit siège (SE).

6. Dispositif selon l'une des revendications 1 à 5, **caractérisé en ce qu'**en présence de moyens de verrouillage (VR) comprenant un levier (L1) monté à rotation sur un axe (AX1) et comportant une première partie (R1) propre à immobiliser ledit pêne (PE) lorsque ledit levier (L1) est dans ladite première position et une seconde partie (R2) solidarisée à ladite première partie (R1) et propre, en cas d'actionnement au moyen dudit premier actionneur (A1), à entraîner ladite première partie (R1) de sorte qu'elle libère ledit pêne (PE), ledit câble (CA) comprend une autre extrémité (E2) raccordée à ladite première partie (R1) du levier (L1) et propre, en cas de tirage au moyen dudit second actionneur (A2), à entraîner ladite première partie (R1) de sorte qu'elle libère ledit pêne (PE).
